(19) **Europäisches Patentamt / European Patent Office / Office européen des brevets**

(11) **EP 2 130 591 B1**

(12) **EUROPEAN PATENT SPECIFICATION**

(45) Date of publication and mention
of the grant of the patent:
**06.03.2013 Bulletin 2013/10**

(51) Int Cl.:
*B01J 35/04* (2006.01)  *B01J 29/00* (2006.01)
*B01D 53/92* (2006.01)  *F01N 3/00* (2006.01)
*B01D 53/94* (2006.01)  *B01J 29/72* (2006.01)
*C04B 38/00* (2006.01)  *F01N 3/022* (2006.01)
*F01N 3/28* (2006.01)  *B01D 46/24* (2006.01)
*B01J 35/10* (2006.01)

(21) Application number: **08022268.0**

(22) Date of filing: **22.12.2008**

(54) **Honeycomb structure**

Wabenstruktur

Structure en nid d'abeille

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.05.2008 PCT/JP2008/059261**

(43) Date of publication of application:
**09.12.2009 Bulletin 2009/50**

(73) Proprietor: **Ibiden Co., Ltd.
Gifu 503-8604 (JP)**

(72) Inventors:
 • **Kunieda, Masafumi
 Ibi-gun
 Gifu 501-0695 (JP)**

 • **Yoshimura, Ken
 Ibi-gun
 Gifu 501-0695 (JP)**
 • **Goto, Shinnosuke
 Ibi-gun
 Gifu 501-0695 (JP)**

(74) Representative: **HOFFMANN EITLE
Patent- und Rechtsanwälte
Arabellastrasse 4
81925 München (DE)**

(56) References cited:
**EP-A- 1 852 184   EP-A- 1 857 427
EP-A- 1 927 391   EP-A- 1 927 392
EP-A- 2 105 271   JP-A- 2005 248 726
US-A- 5 116 586   US-A1- 2007 259 770**

**Description**

BACKGROUND OF THE INVENTION

1. Field of the Invention

The present invention relates to a honeycomb structure.

2. Description of the Related Art

Various technologies have been developed for converting automotive exhaust gases. However, with ever-growing traffic volumes, emission control measures currently being taken are hardly enough. In Japan and throughout the world, automotive emission control is expected to become stricter. Especially, regulation of NOx in diesel exhaust gases is becoming very strict. Conventionally, NOx reduction has been achieved by controlling combustion systems of engines. However, it is no longer possible to sufficiently reduce NOx solely by controlling combustion systems. To cope with this problem, a NOx-reduction system (called a selective catalytic reduction (SCR) system) using ammonia as a reducing agent has been proposed as a diesel NOx control system.

Patent document 1 discloses a honeycomb structure used as a catalyst carrier in such a system. The disclosed honeycomb structure is produced by combining honeycomb units. Each of the honeycomb units is made by mixing γ-alumina, ceria, zirconia, zeolite, and the like with inorganic fibers and a binder for improving the strength, molding the mixture into a honeycomb shape, and firing the molded mixture. Thus, the disclosed honeycomb structure has improved strength that is an important factor for a catalyst carrier used for vehicles.

Also, patent document 2 discloses a honeycomb structure used as a catalyst carrier for vehicles. The disclosed honeycomb structure has a pore distribution that shows peaks in a pore diameter range between 0.006 μm and 0.01 μm corresponding to micropores and in a pore diameter range between 0.05 μm and 150 μm corresponding to macropores. The pores increase contact areas of NOx-occluding materials and catalytic components with exhaust gases.

[Patent document 1] WO 2005/063653
[Patent document 2] WO 2006/070540

Here, when zeolite is used as the main material of the honeycomb units of the honeycomb structure disclosed in patent document 1 and the honeycomb units are manufactured by molding and firing, the strength of the honeycomb units may become insufficient if the amount of zeolite is increased. A honeycomb structure made of such weak honeycomb units may not be able to maintain its function as a NOx-reduction catalyst carrier for automotive exhaust gases.

In the case of the honeycomb structure disclosed in patent document 2, if the peaks in the pore distribution become broad, the strength of the honeycomb structure becomes insufficient to be used as a NOx-reduction catalyst carrier for automotive exhaust gases.

SUMMARY OF THE INVENTION

According to an aspect of the present invention, a honeycomb structure includes at least one honeycomb unit. The honeycomb unit includes zeolite; an inorganic binder; and cell walls defining cells extending along the longitudinal direction of the honeycomb unit from one end face to the other end face. In a pore distribution curve of the cell walls where the horizontal axis represents pore diameter and the vertical axis represents log differential pore volume, the honeycomb unit has one or more peak values of the log differential pore volume in a pore diameter range between 0.006 μm and 0.06 μm and has one or more peak values of the log differential pore volume in a pore diameter range greater than 0.06 μm and less than or equal to 1 μm. In the honeycomb unit, the volume of pores having diameters in a range plus or minus 0.03 μm of a pore diameter corresponding to the highest one of the peak values of the log differential pore volume in the pore diameter range greater than 0.06 μm and less than or equal to 1 μm, amounts to 60% to 95% of the volume of pores having diameters greater than 0.06 μm and less than or equal to 1 μm.

BRIEF DESCRIPTION OF THE DRAWINGS

FIG. 1A is a perspective view of a honeycomb structure including multiple honeycomb units according to an embodiment of the present invention;
FIG. 1B is a perspective view of a honeycomb structure including one honeycomb unit according to an embodiment of the present invention;

FIG. 2 is a perspective view of a honeycomb unit used for the honeycomb structure of FIG. 1A;

FIG. 3 is a graph showing a pore distribution curve of cell walls of a honeycomb unit of example 1; and

FIG. 4 is a graph showing relationships between the sharpness of macropores and the bending strength of honeycomb units of examples and comparative examples.

DESCRIPTION OF THE PREFERRED EMBODIMENTS

Preferred embodiments of the present invention are described below with reference to the accompanying drawings.

The inventors of the present invention examined what causes the strength of a honeycomb structure using zeolite as its main material to become low. According to the examination, it is supposed that the bond between zeolite particles caused by dehydration condensation reaction is insufficient. Because zeolite particles contain a smaller amount of hydroxyl groups compared with inorganic oxide materials such as alumina, zeolite particles are less likely to show dehydration condensation reaction that increases the strength.

The inventors searched for a method to obtain a honeycomb structure with sufficient strength even when zeolite is used as its main material. The strength of a honeycomb structure can be effectively improved by increasing the contact areas of fine particles with each other and by causing the fine particles to uniformly contact each other. The result of increasing the contact areas of fine particles and causing the fine particles to uniformly contact each other appears in the pore distribution of cell walls. Therefore, the inventors examined cell wall pore distributions of honeycomb units to obtain honeycomb units with superior strength and thereby to produce a honeycomb structure with improved strength.

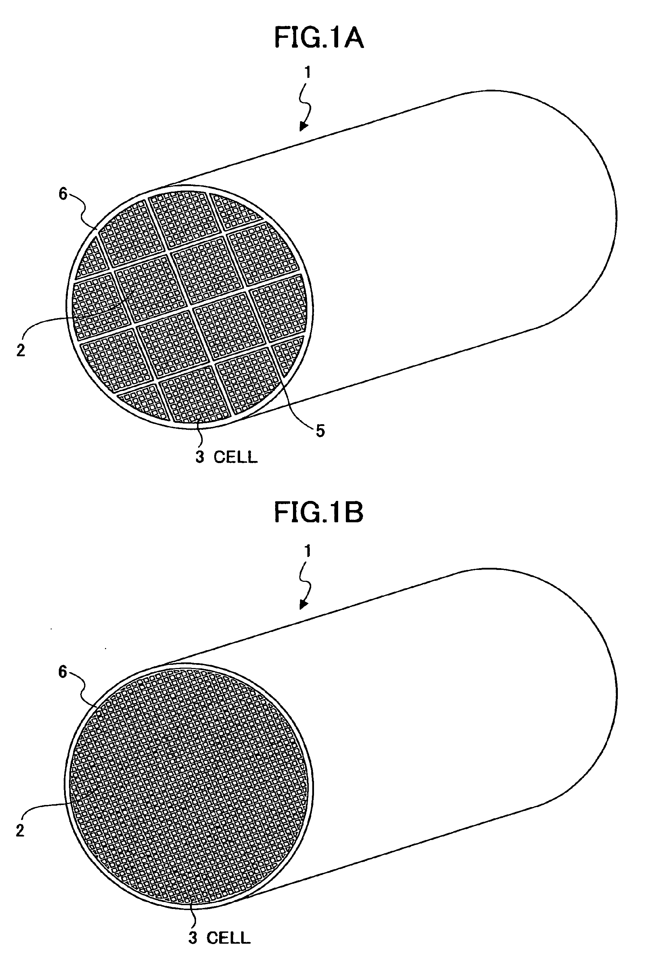

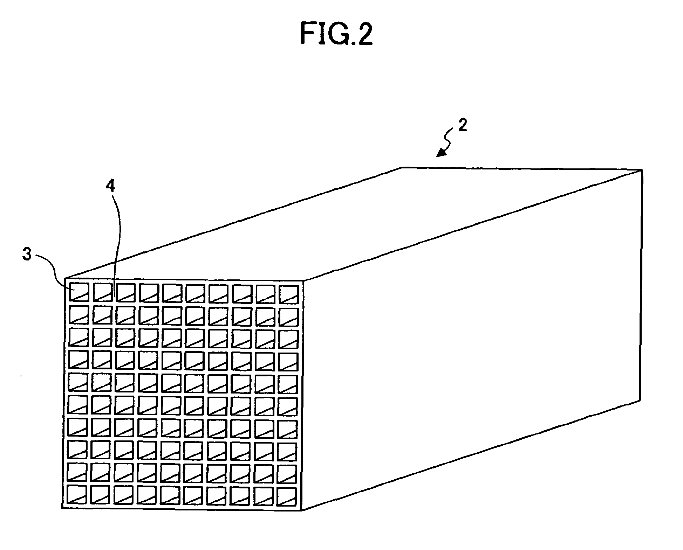

A honeycomb structure according to an embodiment of the present invention includes one or more honeycomb units each of which is a fired body including cell walls that define multiple cells extending along a longitudinal direction from one end face to the other end face. FIG. 1A is a perspective view of an exemplary honeycomb structure. A honeycomb structure 1 shown in FIG. 1A includes multiple honeycomb units 2 that are bonded together by interposing an adhesive 5. Each of the honeycomb units 2 is formed such that cells 3 are arranged parallel to the longitudinal direction of the honeycomb unit. FIG. 1B is a perspective view of another exemplary honeycomb structure. A honeycomb structure 1 shown in FIG. 1B includes one honeycomb unit 2. Thus, the honeycomb structure 1 may include either one honeycomb unit 2 or multiple honeycomb units 2. The side (the surface without cell openings) of the honeycomb structure 1 is preferably covered by an external wall 6 made of a coating layer to increase the strength. As exemplified by a perspective view of FIG. 2, the honeycomb unit 2 of the honeycomb structure 1 includes multiple cell walls 4 that define multiple cells 3 expending along the longitudinal direction of the honeycomb unit 2.

(Pore Structure of Cell Walls of Honeycomb Unit)

In a pore distribution curve where the horizontal axis represents the pore diameter ($\mu$m) and the vertical axis represents the log differential pore volume ($cm^3$/g), the honeycomb unit 2 of the embodiment of the present invention has one or more peak values of the log differential pore volume in a pore diameter range between 0.006 $\mu$m and 0.06 $\mu$m and also has one or more peak values of the log differential pore volume in a pore diameter range greater than 0.06 $\mu$m and less than or equal to 1 $\mu$m. Also, in the honeycomb unit 2, the volume of pores having diameters in a range plus or minus 0.03 $\mu$m of a pore diameter corresponding to the highest one of the peak values of the log differential pore volume in the pore diameter range greater than 0.06 $\mu$m and less than or equal to 1 $\mu$m, amounts to 60% to 95% of the volume of pores having diameters greater than 0.06 $\mu$and less than or equal to 1 $\mu$m. Preferably, the peak values of the log differential pore volume in the pore diameter range greater than 0.06 $\mu$m and less than or equal to 1 $\mu$m are present in a pore diameter range greater than 0.06 $\mu$m and less than or equal to 0.1 $\mu$m.

Generally, when a catalyst carrier or a catalyst is produced by firing zeolite or inorganic particles, micropores, which are caused mainly by primary particles and have diameters less than or equal to 0.06 $\mu$m, and macropores, which are caused mainly by gaps generated when secondary particles combine with each other and have diameters greater than or equal to 0.06 $\mu$m, are formed in the fired body (hereafter, pores of cell walls having diameters between 0.006 $\mu$m and 0.06 $\mu$m are called micropores and pores of cell walls having diameters greater than 0.06 $\mu$m and less than or equal to 1 $\mu$m are called macropores).

The amount of catalyst material and the balance between micropores that serve as reaction sites and macropores that allow exhaust gases to penetrate into the inside of cell walls are important factors that determine exhaust gas conversion performance. One way to improve the strength of a honeycomb unit is to add inorganic fibers to the material while maintaining the exhaust gas conversion performance. However, although inorganic fibers contribute to the improvement of the strength, they normally do not contribute to the exhaust gas conversion performance. In the embodiment of the present invention, honeycomb units with improved strength are produced by adjusting the pore distribution of fired bodies and a honeycomb structure is produced by using those honeycomb units.

The sharpness of macropores of a honeycomb unit is preferably between 60% and 95%. The strength of a honeycomb unit can be improved by adjusting the sharpness of its macropores to between 60% and 95%.

(Materials of Fired Body)

A honeycomb unit of the embodiment of the present invention preferably includes zeolite and an inorganic binder and may also include inorganic fibers. Below, components of a honeycomb unit and their materials are described.

(Zeolite)

Zeolite is bound by an inorganic binder. Zeolite functions as a NOx-reduction catalyst as well as an ammonia gas adsorbent. Therefore, zeolite is an essential component of a honeycomb structure of the embodiment of the present invention, i.e., as an exhaust gas NOx-reduction catalyst in a urea SCR system. Any kind of zeolite may be used as long as it has desired catalytic ability and ammonia gas adsorption ability. Examples of zeolites include β-zeolite, γ-zeolite, ferrierite, ZSM-5 zeolite, mordenite, faujasite, zeolite A, and zeolite L. Also, a zeolite that is ion-exchanged in advance may be used. Further, a zeolite may be ion-exchanged after formed into a honeycomb unit. A zeolite ion-exchanged by at least one of metal species including Cu, Fe, Ni, Zn, Mn, Co, Ag, and V is preferably used. The above zeolites may be used individually or in combination.

The molar ratio between silica and alumina (silica/alumina ratio) of zeolite is preferably between 1 and 100. The silica/alumina ratio affects the acidity of zeolite, i.e., the adsorption and reactivity of reactive molecules. Therefore, a preferable silica/alumina ratio is determined according to the purpose.

The content of zeolite per unit apparent volume of a honeycomb unit is preferably between 230 g/L and 700 g/L. In other words, the content of zeolite in a honeycomb unit is preferably between 60 mass% and 80 mass%. The catalytic and adsorption abilities of zeolite increase as the content of zeolite in a honeycomb structure increases. However, just increasing the content of zeolite makes it necessary to decrease the contents of other components (such as inorganic fibers and inorganic binder) and therefore decreases the strength of a fired honeycomb unit.

Zeolite preferably includes secondary particles and the average diameter of secondary particles of zeolite is preferably between 0.5 $\mu$m and 10 $\mu$m. The average diameter of secondary particles may be measured by using zeolite particles as raw material forming the secondary particles before the particles are fired to form a honeycomb unit.

(Inorganic Binder)

As the inorganic binder, for example, an inorganic sol, a clay binder, or the like may be used. Examples of inorganic sols include alumina sol, silica sol, titania sol, sepiolite sol, attapulgite sol, and water glass. Examples of clay binders include terra alba, kaolin, montmorillonite, and multiple chain structure clay (e.g., sepiolite and attapulgite). The above inorganic sols and clay binders may be used individually or in combination. The solid content of inorganic binder in a honeycomb unit is preferably between 5 mass% and 30 mass% and more preferably between 10 mass% and 20 mass%. If the content of inorganic binder is out of the range between 5 mass% and 30 mass%, the moldability may be reduced.

(Inorganic Fibers)

A honeycomb unit of a honeycomb structure of the embodiment of the present invention may also include inorganic fibers. As the inorganic fibers used for a honeycomb unit, for example, any one of or a combination of alumina fibers, silica fibers, silicon carbide fibers, silica-alumina fibers, glass fibers, potassium titanate fibers, aluminum borate fibers, and the like may be used. The inorganic fibers are mixed with zeolite and an inorganic binder, and the mixture of materials is molded and fired to form a honeycomb unit. The inorganic fibers together with the inorganic binder and zeolite form a fiber-reinforced fired body and improve the strength of the honeycomb unit. Here, inorganic fibers include not only long fibers but also short fibers such as whiskers.

Inorganic fibers are inorganic materials having a high aspect ratio (fiber length/fiber diameter) and improve particularly the bending strength. The aspect ratio of inorganic fibers is preferably between 2 and 1000, more preferably between 5 and 800, and still more preferably between 10 and 500. If the aspect ratio of inorganic fibers is less than 2, the effect of improving the strength of the honeycomb unit may become insufficient. On the other hand, if the aspect ratio of inorganic fibers is greater than 1000, the inorganic fibers may cause clogging of a die for molding and reduce the moldability. Also, inorganic fibers with such a high aspect ratio tend to break during molding operations such as extrusion molding, and as a result, the fiber lengths may become inconsistent and the strength of the honeycomb unit may be reduced. If the inorganic fibers have various aspect ratios, an average value of the aspect ratios may be used.

The content of inorganic fibers in a honeycomb unit is preferably between 3 mass% and 50 mass%, more preferably between 3 mass% and 30 mass%, and especially preferably between 5 mass% and 20 mass%. If the content of inorganic fibers is less than 3 mass%, the strength of the honeycomb structure may be reduced. On the other hand, if the content of inorganic fibers becomes greater than 50 mass%, the proportion of zeolite, which serves as a NOx-reduction catalyst, in turn decreases and the NOx-conversion performance of the honeycomb structure is reduced.

(Inorganic Particles)

A honeycomb unit of a honeycomb structure of the embodiment of the present invention may also include inorganic particles other than zeolite particles. Inorganic particles improve the strength of a honeycomb unit. Examples of inorganic particles other than zeolite particles usable for a honeycomb unit of a honeycomb structure of the embodiment of the present invention include, but are not limited to, alumina, silica, zirconia, titania, ceria, mullite, and their precursors. Particularly, alumina and zirconia are preferable. As alumina, γ-alumina or boehmite is preferably used. The above inorganic particles other than zeolite particles may be used individually or in combination.

Before being fired, as are most of industrially-available inorganic compound particles, inorganic particles and zeolite particles as raw material in a honeycomb unit of the embodiment of the present invention include hydroxyl groups. The hydroxyl groups cause dehydration condensation reaction when a honeycomb unit is fired and thereby strengthen the bond between the particles. Particularly, inorganic particles such as alumina particles as raw material are firmly bonded by dehydration condensation reaction during firing.

In a honeycomb structure of the embodiment of the present invention, the average diameter of secondary particles of inorganic particles other than zeolite particles as raw material is preferably less than or equal to the average diameter of secondary particles of zeolite particles. More specifically, the average diameter of inorganic particles other than zeolite particles is preferably between 1/10 and 1/1 of the average diameter of zeolite particles. With inorganic particles other than zeolite particles having such a small average diameter, the strength of a honeycomb unit is improved by the bonding force of the inorganic particles.

The content of inorganic particles other than zeolite particles in a honeycomb unit is preferably between 3 mass% and 30 mass% and more preferably between 5 mass% and 20 mass%. If the content of inorganic particles other than zeolite particles is less than 3 mass%, the contribution of the inorganic particles to the strength of the honeycomb unit is small. Meanwhile, if the content of inorganic particles other than zeolite particles becomes greater than 30 mass%, the proportion of zeolite, which serves as a NOx-reduction catalyst, in turn decreases and the NOx-conversion performance of the honeycomb unit is reduced.

(Catalytic Component)

The cell walls of a honeycomb unit of a honeycomb structure of the embodiment of the present invention may also support a catalytic component. Examples of catalytic components include, but are not limited to, noble metals, alkali metal compounds, and alkaline-earth metal compounds. As noble metals, for example, any one of or a combination of platinum, palladium, and rhodium may be used. As alkali metal compounds, for example, any one of or a combination of potassium compounds, sodium compounds, and the like may be used. As alkaline-earth metal compounds, for example, barium compounds or the like may be used.

(Honeycomb Structure)

A plane orthogonal to the longitudinal direction of cells (hereafter, simply called a cross section) of a honeycomb unit of a honeycomb structure of the embodiment of the present invention may have a square shape, a rectangular shape, a hexagonal shape, or a fan-like shape.

FIGs. 1A and 1B show exemplary honeycomb units. The honeycomb unit 2 includes cell walls 4 defining cells 3 extending from left to right (from the near side to the far side). The thickness of the cell walls 4 is preferably, but is not limited to, between 0.10 mm and 0.50 mm and more preferably between 0.15 mm and 0.35 mm. If the thickness of the cell walls 4 is less than 0.10 mm, the strength of the honeycomb unit may become insufficient. If the thickness of the cell walls 4 is greater than 0.50 mm, the exhaust gas cannot easily penetrate into the cell walls 4 and as a result, the exhaust gas conversion performance may become insufficient. The opening ratio, which indicates an area ratio of cells of a honeycomb unit in a cross section orthogonal to the cells, is preferably between 40% and 80%. An opening ratio of 40 to 80% is preferable to keep the pressure loss below a certain level while maintaining the volume of cell walls, which serve as catalytic component carriers, above a certain level.

The number of cells per unit cross-sectional area of the honeycomb unit is preferably between 15.5 cells/cm$^2$ and 93 cells/cm$^2$ (100 to 600 cpsi), and more preferably between 31 cells/cm$^2$ and 77.5 cells/cm$^2$ (200 to 500 cpsi).

The cross sections of the cells 3 of the honeycomb unit may have any shape. Although the cross sections of the cells 3 shown in FIG. 2 have a square shape, the cross sections of the cells 3 may have any other shape such as a substantially-triangular shape, a substantially-hexagonal shape, or a circular shape.

(Production of Honeycomb Unit)

An exemplary method of producing a honeycomb unit of a honeycomb structure of the embodiment of the present invention is described below. First, a raw material paste including zeolite and an inorganic binder as main components is prepared. The raw material paste is extrusion-molded into a honeycomb unit molded body. The raw material paste may also include inorganic fibers, inorganic particles, an organic binder, a dispersion medium, and/or a molding aid. As the organic binder, for example, any one of or a combination of methylcellulose, carboxymethylcellulose, hydroxyethylcellulose, polyethylene glycol, phenolic resin, epoxy resin, and the like may be used. The amount of organic binder is preferably between 1% and 10% of the total mass (100%) of the solid content of all the materials. As the dispersion medium, for example, water, an organic solvent (such as toluene), an alcohol (such as methanol), or the like may be used. As the molding aid, for example, ethylene glycol, dextrin, fatty acid soap, polyalcohol, or the like may be used.
The raw material paste is preferably prepared by mixing the raw materials using a mixer, an attritor, or the like and by kneading the mixture using a kneader or the like. The raw material paste is preferably molded into a shape having cells, for example, by extrusion molding or the like.
Next, the obtained honeycomb unit molded body is dried using a drying apparatus such as a microwave drying apparatus, a hot-air drying apparatus, a dielectric drying apparatus, a reduced pressure drying apparatus, a vacuum drying apparatus, or a freeze drying apparatus. The dried honeycomb unit molded body is preferably degreased. Although degreasing conditions may be determined freely depending on the kinds and amounts of organic materials in the honeycomb unit molded body, degreasing is preferably performed at 400 °C for about two hours. Then, the dried and degreased honeycomb unit molded body is fired. The firing temperature is preferably between 600 °C and 1200 °C and more preferably between 600 °C and 1000 °C. If the firing temperature is less than 600 °C, sintering may not proceed smoothly and the strength of the honeycomb unit may become insufficient. If the firing temperature is greater than 1200 °C, zeolite crystals may collapse and sintering may proceed too far, and it may become difficult to produce a porous honeycomb unit.

(Production of Honeycomb Structure)

An exemplary method of producing a honeycomb structure including multiple honeycomb units is described below. An adhesive is applied to the sides of honeycomb units produced as described above and the honeycomb units are bonded together. Next, the adhesive is solidified by drying to produce a honeycomb unit bonded body having a predetermined size. The honeycomb unit bonded body is formed into a desired shape by cutting its sides.
As the adhesive, for example, a mixture of an inorganic binder and inorganic particles; a mixture of an inorganic binder and inorganic fibers; a mixture of an inorganic binder, inorganic particles, and inorganic fibers; or the like may be used. The adhesive may also include an organic binder. As the organic binder, for example, any one of or a combination of polyvinyl alcohol, methylcellulose, ethylcellulose, carboxymethylcellulose, and the like may be used.
The thickness of the adhesive layers for bonding the honeycomb units is preferably between 0.5 mm and 2 mm. The number of honeycomb units to be bonded may be determined freely depending on the size of a honeycomb structure to be produced. The honeycomb unit bonded body, which is made by bonding multiple honeycomb units by interposing an adhesive, may be cut and ground according to the shape of the honeycomb structure.
Then, a coating material is applied to the outer surface (the surface without cell openings) of the honeycomb unit bonded body and is solidified by drying to form a coating layer. The coating layer protects the outer surface of the honeycomb structure and improves the strength. The coating material may be made of the same materials as those of the adhesive or may be made of materials different from those of the adhesive. Also, the mixing ratio of materials of the coating material may be the same as or different from that of the adhesive. The thickness of the coating layer is preferably between 0.1 mm and 2 mm. The coating layer may be formed or may not be formed.
After bonding honeycomb units by interposing an adhesive, it is preferable to heat the honeycomb unit bonded body. In the case where the coating layer is formed, the honeycomb structure is preferably degreased after the adhesive layer and the coating layer are formed. Particularly, if the adhesive layer and/or the coating layer includes an organic binder, it is preferable to degrease the organic binder. Although degreasing conditions may be determined freely depending on the kinds and amounts of contained organic materials, degreasing is preferably performed at about 700 °C for about two hours.
FIG. 1A shows an exemplary honeycomb structure 1 having a cylindrical shape and formed by combining multiple honeycomb units 2 each of which is a rectangular pillar and has a square cross section. The honeycomb structure 1 is formed by bonding together the honeycomb units 2 using the adhesive 5, forming the bonded honeycomb units into a cylindrical shape by cutting the outer surface, and forming the coating layer 6 on the outer surface using a coating material. Alternatively, for example, the honeycomb structure 1 with a cylindrical shape may be formed by bonding honeycomb units 2 with fan-shaped and square-shaped cross sections. In this case, the cutting and grounding processes may be omitted.

Next, an exemplary method of producing a honeycomb structure including one honeycomb unit is described. In this case, a honeycomb unit is produced as described above and formed into a cylindrical shape, and a coating layer is formed on the outer surface of the honeycomb unit to produce the honeycomb structure. FIG. 1B shows an exemplary honeycomb structure including one honeycomb unit.

[EXAMPLES]

The present invention is described below in more detail by way of examples where honeycomb structures were produced by varying conditions. However, the present invention is not limited to the examples described below.

<EXAMPLE 1>

(Production of Honeycomb Unit)

The following materials were mixed: 2250 mass parts of zeolite particles (Fe ion-exchanged $\beta$-zeolite, silica/alumina ratio: 40, specific surface area: 110 $m^2$/g, average particle diameter: 2 $\mu$m (average particle diameter of secondary particles)), 680 mass parts of alumina fibers (average fiber diameter: 6 $\mu$m, average fiber length: 100 $\mu$m), 2600 mass parts of alumina sol (solid content: 20 mass%), and 320 mass parts of methylcellulose used as an organic binder. Further, small amounts of a plasticizer, a surfactant, and a lubricant were added to the mixture. Then, the mixture was kneaded while adjusting its viscosity by adding water to obtain a mixed composition for molding. Next, the mixed composition was extrusion-molded using an extruder to obtain raw honeycomb unit molded bodies.

The honeycomb unit molded bodies were sufficiently dried using a microwave drying apparatus and a hot-air drying apparatus and then degreased at 400 °C for two hours. Then, the honeycomb unit molded bodies were fired at 700 °C for two hours. As a result, rectangular-pillar honeycomb units with a height of 35 mm, a width of 35 mm, and a length of 150 mm were obtained. The cells of the honeycomb units had a quadrangular (square) shape. The cell density was 93 cells/$cm^2$ and the thickness of the cell walls was 0.2 mm. The Fe ion-exchanged zeolite was prepared by impregnating zeolite particles with a ferric nitrate ammonium solution for Fe ion exchange. The amount of ion-exchange was measured by IPC emission analysis using ICPS-8100 (Shimadzu Corporation).

Table 1 shows specific surface areas, average particle diameters, and particle size distributions of zeolite particles used to produce honeycomb units of examples and comparative examples; peak values of the log differential pore volume of micropores of honeycomb unit fired bodies (micropore peak values); peak values of the log differential pore volume of macropores (macropore peak values), and the sharpness of macropores. The particle size distribution is an index indicating the spread of particle size distribution and is represented by {(D90-D10)/D50} where D is the diameter of zeolite particles. The sharpness of macropores is the ratio (percentage) of the volume of pores having diameters in a range plus or minus 0.03 $\mu$m of a pore diameter corresponding to the peak value of the log differential pore volume of macropores to the total volume of macropores. In example 1, each of the log differential pore volume of micropores and the log differential pore volume of macropores showed only one peak value.

[Table 1]

| | Zeolite (raw material) | | | After being fired | | | Cell structure | | Opening ratio (%) | Carrier weight (g/L) | Evaluation |
|---|---|---|---|---|---|---|---|---|---|---|---|
| | Specific surface area $(m^2/g)$ | Average particle diameter $(\mu m)$ | Particle size distribution | Micropore peak value $(\mu m)$ | Macropore peak value $(\mu m)$ | Macropore sharpness (%) | Wall thickness (mm) | Cell density (cells/cm$^2$) | | | Bending strength (MPa) |
| Example 1 | 110 | 2 | 2.2 | 0.008 | 0.08 | 80 | 0.2 | 93 | 64.1 | 381 | 8.4 |
| Example 2 | 110 | 2 | 1.8 | 0.008 | 0.07 | 95 | 0.2 | 93 | 64.1 | 385 | 8.7 |
| Example 3 | 110 | 2 | 2.6 | 0.008 | 0.09 | 60 | 0.2 | 93 | 64.1 | 382 | 8.2 |
| Example 4 | 110 | 4 | 2.2 | 0.008 | 0.10 | 76 | 0.2 | 93 | 64.1 | 380 | 7.0 |
| Example 5 | 80 | 2 | 2.2 | 0.010 | 0.08 | 73 | 0.2 | 93 | 64.1 | 382 | 7.2 |
| Example 6 | 130 | 2 | 2.2 | 0.006 | 0.08 | 75 | 0.2 | 93 | 64.1 | 385 | 8.5 |
| Example 7 | 110 | 2 | 1.8 | 0.008 | 0.07 | 95 | 0.2 | 124 | 60.6 | 451 | 10.2 |
| Example 8 | 110 | 4 | 2.2 | 0.008 | 0.10 | 76 | 0.2 | 124 | 60.6 | 455 | 8.6 |
| Comparative example 1 | 110 | 10 | 2.8 | 0.008 | 0.22 | 46 | 0.2 | 93 | 64.1 | 382 | 4.2 |
| Comparative example 2 | 110 | 2 | 3.5 | 0.008 | 0.09 | 56 | 0.2 | 93 | 64.1 | 384 | 4.6 |

Table 1 also shows cell structures, opening ratios, carrier weights, and bending strength of obtained honeycomb units. The bending strength of honeycomb units was measured according to three-point bending test (JIS R 1601). The measurement was performed using Instron 5582 as the measurement apparatus by applying a breaking load W to the cell walls in the vertical direction with a span L of 135 mm and a crosshead speed of 1 mm/min. The bending strength σ was calculated according to the following formula where a second moment Z of the cross section was obtained by subtracting the moment of cavities of cells:

$$\sigma = WL/4Z$$

(Production of Honeycomb Structure)

An adhesive paste was applied to the sides of the produced honeycomb units to form an adhesive layer with a thickness of 1 mm. Then, four rows and four columns of the honeycomb units were bonded together and solidified by drying at 120 °C to form a honeycomb unit bonded body with a substantially rectangular shape. The adhesive paste was prepared by mixing 29 mass% of alumina particles (average particle diameter: 2 μm), 7 mass% of alumina fibers (average fiber diameter: 6 μm, average fiber length: 100 μm), 34 mass% of alumina sol (solid content: 20 mass%), 5 mass% of carboxymethyl cellulose, and 25 mass% of water. The produced honeycomb unit bonded body was formed into a cylindrical shape by cutting its side walls using a diamond cutter. Then, a coating material paste (same as the adhesive paste) was applied to the outer surface of the cylindrical honeycomb unit bonded body to form a coating layer with a thickness of 0.5 mm. The produced cylindrical honeycomb unit bonded body had substantially the same shape as that shown in FIG. 1A. The cylindrical honeycomb unit bonded body was solidified by drying at 120 °C and kept in a temperature of 700 °C for two hours to degrease the adhesive layer and the coating layer. As a result, a cylindrical honeycomb structure with a diameter of about 144 mm and a length of about 150 mm was obtained.

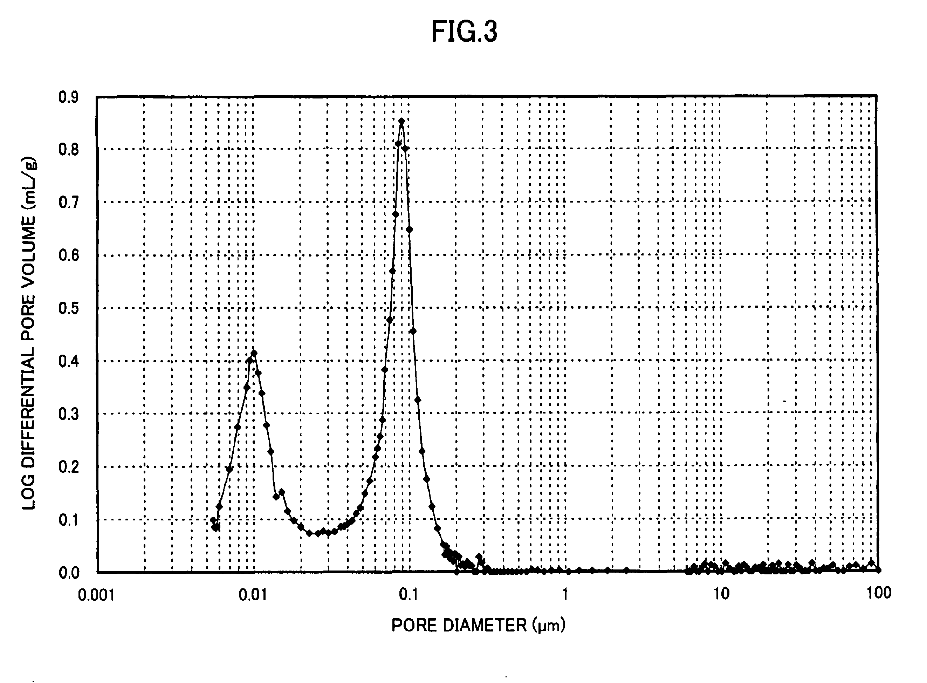

FIG. 3 shows a pore distribution curve of cell walls of the honeycomb unit of example 1 where the horizontal axis represents the pore diameter (μm) and the vertical axis represents the log differential pore volume (cm$^3$/g). As shown by the pore distribution curve of FIG. 3, the honeycomb unit of example 1 has one peak value of the log differential pore volume in a pore diameter range between 0.006 μm and 0.06 μm and also has one peak value of the log differential pore volume in a pore diameter range greater than 0.06 μm and less than or equal to 0.1 μm.

(Examples 2-8 and Comparative Example 1 and 2)

(Production of Honeycomb Unit)

Honeycomb units of examples 2-8 and comparative examples 1 and 2 were produced in substantially the same manner as in example 1 except that zeolite particles with different specific surface areas, average particle diameters, and particle size distributions were used as shown in table 1. Characteristics of the produced honeycomb units are also shown in table 1.

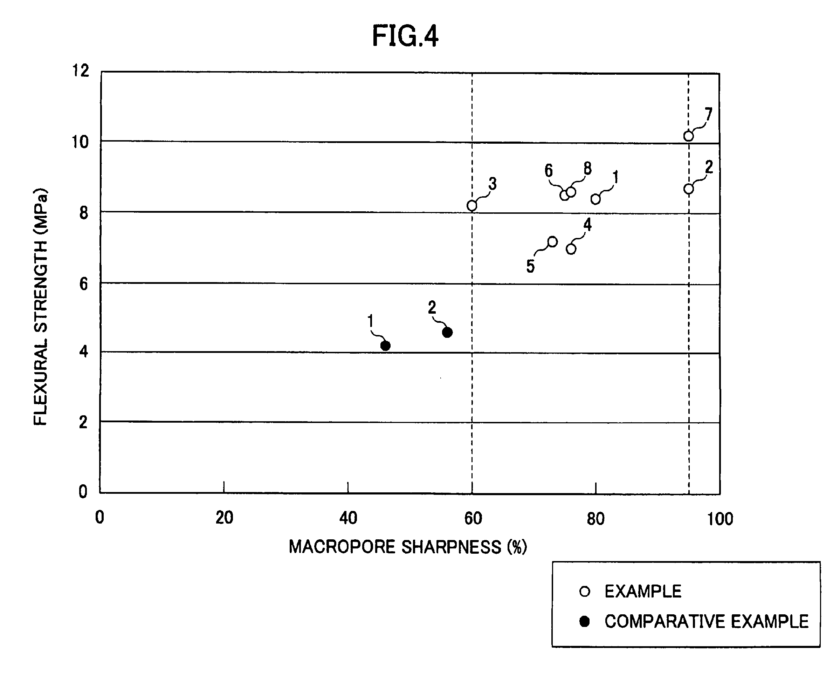

FIG. 4 is a graph showing relationships between the sharpness of macropores and the bending strength of honeycomb units. The horizontal axis represents the sharpness (%) of macropores of the honeycomb units and the vertical axis represents the bending strength (MPa) of the honeycomb units. In FIG. 4, ○ indicates examples and ● indicates comparative examples, and the numbers attached to ○ and ● indicate the numbers of the corresponding examples and comparative examples.

(Evaluation Results)

As shown in table 1 and FIG. 4, all the honeycomb units of examples 1-8 and comparative examples 1 and 2 have micropores and macropores. The sharpness levels of macropores of honeycomb unit fired bodies of examples 1-8 were within a range between 60% and 95%. Meanwhile, the sharpness levels of macropores of honeycomb unit fired bodies of comparative examples 1 and 2 were 46% and 56%, respectively, and were out of the range between 60% and 95%. Accordingly, the bending strength levels of the honeycomb units of examples 1-8 were high in a range between 7 to 10.2 MPa, but the bending strength levels of the honeycomb units of comparative examples 1 and 2 were low at 4.2 MPa and 4.6 MPa. Thus, the honeycomb units of examples 1-8 are suitable for automotive-exhaust-gas conversion catalyst carriers.

Embodiments of the present invention provide a honeycomb structure having enough strength and catalyst supporting capability to be mounted on a vehicle as an automotive-exhaust-gas conversion catalyst carrier.

A honeycomb structure according to embodiments of the present invention includes one or more honeycomb units with superior strength and therefore has enough strength to resist vibration when used as an automotive-exhaust-gas conversion catalyst carrier. Particularly, a honeycomb structure according to embodiments of the present invention is suitable for a NOx-reduction catalyst carrier used in a urea SCR system (a diesel exhaust gas conversion system using urea) that requires a zeolite catalyst.

**Claims**

1. A honeycomb structure, comprising:

   at least one honeycomb unit having a longitudinal direction and comprising:

   a zeolite;
   an inorganic binder; and
   cell walls defining cells extending along the longitudinal direction from one end face to the other end face;

   wherein in a pore distribution curve of the cell walls where a horizontal axis represents a pore diameter and a vertical axis represents a log differential pore volume, the honeycomb unit has one or more peak values of the log differential pore volume in a pore diameter range between 0.006 $\mu$m and 0.06 $\mu$m and has one or more peak values of the log differential pore volume in a pore diameter range greater than 0.06 $\mu$m and less than or equal to 1 $\mu$m; and
   wherein the volume of pores having diameters in a range plus or minus 0.03 $\mu$m of a pore diameter corresponding to the highest one of the peak values of the log differential pore volume in the pore diameter range greater than 0.06 pm and less than or equal to 1 $\mu$m, amounts to 60% to 95% of the volume of pores having diameters greater than 0.06 $\mu$m and less than or equal to 1 $\mu$m.

2. The honeycomb structure as claimed in claim 1, wherein the peak values of the log differential pore volume in the pore diameter range greater than 0.06 $\mu$m and less than or equal to 1 $\mu$m are present in a pore diameter range greater than 0.06 $\mu$m and less than or equal to 0.1 $\mu$m.

3. The honeycomb structure as claimed in claim 1 or 2, wherein the zeolite includes $\beta$-zeolite, Y-zeolite, ferrierite, ZSM-5 zeolite, mordenite, faujasite, zeolite A, or zeolite L.

4. The honeycomb structure as claimed in any one of claims 1 through 3, wherein a molar ratio between silica and alumina (silica/alumina ratio) of the zeolite is between 1 and 100.

5. The honeycomb structure as claimed in any one of claims 1 through 4, wherein the content of the zeolite per liter of apparent volume of the honeycomb unit is between 230 g and 700 g.

6. The honeycomb structure as claimed in any one of claims 1 through 5, wherein the content of the zeolite is between 60 mass% and 80 mass%.

7. The honeycomb structure as claimed in any one of claims 1 through 6, wherein the zeolite includes secondary particles and the average diameter of the secondary particles is between 0.5 $\mu$m and 10 $\mu$m.

8. The honeycomb structure as claimed in any one of claims 1 through 7, wherein the zeolite is ion-exchanged by Cu, Fe, Ni, Zn, Mn, Co, Ag, or V.

9. The honeycomb structure as claimed in any one of claims 1 through 8, wherein the honeycomb unit further includes inorganic fibers.

10. The honeycomb structure as claimed in claim 9, wherein the inorganic fibers include at least one of alumina fibers, silica fibers, silicon carbide fibers, silica-alumina fibers, glass fibers, potassium titanate fibers, and aluminum borate fibers.

11. The honeycomb structure as claimed in any one of claims 1 through 10, wherein the inorganic binder includes at least one of alumina sol, silica sol, titania sol, water glass, sepiolite sol, and attapulgite sol.

**12.** The honeycomb structure as claimed in any one of claims 1 through 11, wherein an opening ratio of the honeycomb unit is between 40% and 80%.

**13.** The honeycomb structure as claimed in any one of claims 1 through 12, wherein the thickness of the cell walls is between 0.1 mm and 0.5 mm.

**14.** The honeycomb structure as claimed in any one of claims 1 through 13, wherein a catalytic component is supported on the cell walls.

**15.** The honeycomb structure as claimed in claim 14, wherein the catalytic component is a noble metal, an alkali metal compound, or an alkaline-earth metal compound.

**16.** The honeycomb structure as claimed in any one of claims 1 through 15, wherein the honeycomb structure comprises a plurality of honeycomb units that are bonded together by interposing an adhesive.


**Patentansprüche**

**1.** Wabenstruktur, umfassend:

mindestens eine Wabeneinheit mit einer Längsrichtung und umfassend:

ein Zeolith;
ein anorganisches Bindemittel; und
Zellwände, die Zellen definieren, die sich entlang der Längsrichtung von einer Stirnfläche zur anderen Stirnfläche erstrecken;
wobei in einer Porenverteilungskurve der Zellwände, in der die horizontale Achse den Porendurchmesser darstellt und die vertikale Achse den dekadischen Logarithmus des differentiellen Porenvolumens darstellt, die Wabeneinheit einen oder mehrere Peakwerte des dekadischen Logarithmus des differentiellen Porenvolumens in einem Porendurchmesserbereich zwischen 0,006 und 0,06 $\mu$m aufweist und einen oder mehrere Peakwerte des dekadischen Logarithmus des differentiellen Porenvolumens in einem Porendurchmesserbereich von mehr als 0,06 $\mu$m und weniger als oder gleich 1 $\mu$m aufweist; und
wobei das Volumen der Poren mit einem Durchmesser im Bereich von plus oder minus 0,03 $\mu$m um den Porendurchmesser der dem höchsten Peakwert des dekadischen Logarithmus des differentiellen Porenvolumens im Porendurchmesserbereich von mehr als 0,06 $\mu$m und weniger als oder gleich 1 $\mu$m entspricht, 60 bis 95 % des Volumens der Poren mit einem Durchmesser von mehr als 0,06 $\mu$m und weniger als oder gleich 1 $\mu$m ausmacht.

**2.** Wabenstruktur gemäss Anspruch 1, wobei die Peakwerte des dekadischen Logarithmus des differentiellen Porenvolumens im Porendurchmesserbereich von mehr als 0,06 $\mu$m und weniger als oder gleich 1 $\mu$m in einem Porendurchmesserbereich von mehr als 0,06 $\mu$m und weniger als oder gleich 0,1 $\mu$m vorliegen.

**3.** Wabenstruktur gemäss Anspruch 1 oder 2, wobei das Zeolith $\beta$-Zeolith, Y-Zeolith, Ferrierit, ZSM-5-Zeolith, Mordenit, Faujasit, Zeolith A oder Zeolith L umfasst.

**4.** Wabenstruktur gemäss irgendeinem der Ansprüche 1 bis 3, wobei das Molverhältnis zwischen Siliciumoxid und Aluminiumoxid (Siliciumoxid/Aluminiumoxid-Verhältnis) des Zeoliths zwischen 1 und 100 liegt.

**5.** Wabenstruktur gemäss irgendeinem der Ansprüche 1 bis 4, wobei der Gehalt an Zeolith pro Liter scheinbarem Volumen der Wabeneinheit zwischen 230 und 700 g liegt.

**6.** Wabenstruktur gemäss irgendeinem der Ansprüche 1 bis 5, wobei der Gehalt an Zeolith zwischen 60 und 80 Masse-% liegt.

**7.** Wabenstruktur gemäss irgendeinem der Ansprüche 1 bis 6, wobei das Zeolith Sekundärteilchen umfasst und der mittlere Durchmesser der Sekundärteilchen zwischen 0,5 und 10 $\mu$m liegt.

**8.** Wabenstruktur gemäss irgendeinem der Ansprüche 1 bis 7, wobei das Zeolith durch Cu, Fe, Ni, Zn, Mn, Co, Ag oder V ionenausgetauscht ist.

**9.** Wabenstruktur gemäss irgendeinem der Ansprüche 1 bis 8, wobei die Wabeneinheit ferner anorganische Fasern einschliesst.

**10.** Wabenstruktur gemäss Anspruch 9, wobei die anorganischen Fasern mindestens eines aus Aluminiumoxidfasern, Siliciumoxidfasern, Siliciumcarbidfasern, Siliciumoxid-AluminiumoxidFasern, Glasfasern, Kaliumtitanatfasern und Aluminiumboratfasern umfassen.

**11.** Wabenstruktur gemäss irgendeinem der Ansprüche 1 bis 10, wobei das anorganische Bindemittel mindestens eines aus Aluminiumoxidsol, Silicasol, Titanoxidsol, Wasserglas, Sepiolitsol und Attapulgitsol einschliesst.

**12.** Wabenstruktur gemäss irgendeinem der Ansprüche 1 bis 11, wobei das Öffnungsverhältnis der Wabeneinheit zwischen 40 und 80 % liegt.

**13.** Wabenstruktur gemäss irgendeinem der Ansprüche 1 bis 12, wobei die Dicke der Zellwände zwischen 0,1 und 0,5 mm liegt.

**14.** Wabenstruktur gemäss irgendeinem der Ansprüche 1 bis 13, worin eine katalytische Komponente von den Zellwänden getragen wird.

**15.** Wabenstruktur gemäss Anspruch 14, wobei die katalytische Komponente ein Edelmetall, eine Alkalimetallverbindung oder eine Erdalkalimetallverbindung ist.

**16.** Wabenstruktur gemäss irgendeinem der Ansprüche 1 bis 15, wobei die Wabenstruktur eine Vielzahl von Wabeneinheiten umfasst, die durch Zwischenlagern eines Klebstoffs miteinander verbunden sind.

**Revendications**

**1.** Structure en nid d'abeilles, comprenant :

au moins une unité en nid d'abeilles ayant une direction longitudinale et comprenant :

une zéolite ;
un liant inorganique ; et
des parois de cellule définissant des cellules s'étendant le long de la direction longitudinale depuis une face d'extrémité jusqu'à l'autre face d'extrémité ;
dans laquelle dans une courbe de distribution de pores des parois de cellule où un axe horizontal représente un diamètre de pore et un axe vertical représente un volume de pore différentiel logarithmique, l'unité en nid d'abeilles a une ou plusieurs valeurs maximales du volume de pore différentiel logarithmique dans une plage de diamètre de pore entre 0,006 $\mu$m et 0,06 $\mu$m et a une ou plusieurs valeurs maximales du volume de pore différentiel logarithmique dans une plage de diamètre de pore supérieure à 0,06 $\mu$m et inférieure ou égal à 1 $\mu$m ; et
dans laquelle le volume de pores ayant des diamètres dans une plage de plus ou moins 0,03 $\mu$m d'un diamètre de pore correspondant à la plus élevée des valeurs maximales du volume de pore différentiel logarithmique dans la plage de diamètre de pore supérieure à 0,06 $\mu$m et inférieure ou égale à 1 $\mu$m, s'élève à 60 % à 95 % du volume de pores ayant des diamètres supérieurs à 0,06 $\mu$m et inférieurs ou égaux à 1 $\mu$m.

**2.** Structure en nid d'abeilles selon la revendication 1, dans laquelle les valeurs maximales du volume de pore différentiel logarithmique dans la plage de diamètre de pore supérieure à 0,06 $\mu$m et inférieure ou égale à 1 $\mu$m sont présentes dans une plage de diamètre de pore supérieure à 0,06 $\mu$m et inférieure ou égale à 0,1 $\mu$m.

**3.** Structure en nid d'abeilles selon la revendication 1 ou 2, dans laquelle la zéolite inclut de la zéolite $\beta$, de la zéolite Y, de la ferriérite, de la zéolite ZSM-5, de la mordénite, de la faujasite, de la zéolite A, ou de la zéolite L.

**4.** Structure en nid d'abeilles selon l'une quelconque des revendications 1 à 3, dans laquelle un rapport molaire entre la silice et l'alumine (rapport silice / alumine) de la zéolite est entre 1 et 100.

5. Structure en nid d'abeilles selon l'une quelconque des revendications 1 à 4, dans laquelle la teneur de la zéolite par litre de volume apparent de l'unité en nid d'abeilles est entre 230 g et 700 g.

6. Structure en nid d'abeilles selon l'une quelconque des revendications 1 à 5, dans laquelle la teneur de la zéolite est entre 60 % en masse et 80 % en masse.

7. Structure en nid d'abeilles selon l'une quelconque des revendications 1 à 6, dans laquelle la zéolite inclut des particules secondaires et le diamètre moyen des particules secondaires est entre 0,5 $\mu$m et 10 $\mu$m.

8. Structure en nid d'abeilles selon l'une quelconque des revendications 1 à 7, dans laquelle la zéolite subit un échange d'ion par Cu, Fe, Ni, Zn, Mn, Co, Ag, ou V.

9. Structure en nid d'abeilles selon l'une quelconque des revendications 1 à 8, dans laquelle l'unité en nid d'abeilles inclut en outre des fibres inorganiques.

10. Structure en nid d'abeilles selon la revendication 9, dans laquelle les fibres inorganiques incluent au moins l'une de fibres d'alumine, de fibres de silice, de fibres de carbure de silicium, de fibres de silice alumine, de fibres de verre, de fibres de titanate de potassium, et de fibres de borate d'aluminium.

11. Structure en nid d'abeilles selon l'une quelconque des revendications 1 à 10, dans laquelle le liant inorganique inclut au moins l'un de sol d'alumine, de sol de silice, de sol d'oxyde de titane, de silicate de sodium, de sol de sépiolite et de sol d'attapulgite.

12. Structure en nid d'abeilles selon l'une quelconque des revendications 1 à 11, dans laquelle un rapport d'ouverture de l'unité en nid d'abeilles est entre 40 % et 80 %.

13. Structure en nid d'abeilles selon l'une quelconque des revendications 1 à 12, dans laquelle l'épaisseur des parois de cellule est entre 0,1 mm et 0,5 mm.

14. Structure en nid d'abeilles selon l'une quelconque des revendications 1 à 13, dans laquelle un composant catalytique est supporté sur les parois de cellule.

15. Structure en nid d'abeilles selon la revendication 14, dans laquelle le composant catalytique est un métal noble, un composé de métal alcalin, ou un composé de métal alcalino-terreux.

16. Structure en nid d'abeilles selon l'une quelconque des revendications 1 à 15, dans laquelle la structure en nid d'abeilles comprend une pluralité d'unités en nid d'abeilles qui sont liées ensemble en interposant un adhésif.

# FIG.1A

# FIG.1B

# FIG.2

FIG.3

# FIG.4

EP 2 130 591 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005063653 A

- WO 2006070540 A